(19) Europäisches Patentamt
European Patent Office
Office européen des brevets

(11) Publication number: **0 060 132**
**B1**

(12) **EUROPEAN PATENT SPECIFICATION**

(45) Date of publication of patent specification: **17.07.85**

(21) Application number: **82301187.9**

(22) Date of filing: **09.03.82**

(51) Int. Cl.$^4$: **C 07 F 9/38,** C 07 F 9/40, C 07 F 9/44, A 01 N 57/18, A 01 N 57/26

# (54) N-formyl-n-phosphonomethylglycine and esters thereof as herbicides.

(30) Priority: **11.03.81 US 242810**

(43) Date of publication of application:
**15.09.82 Bulletin 82/37**

(45) Publication of the grant of the patent:
**17.07.85 Bulletin 85/29**

(84) Designated Contracting States:
**AT BE CH DE FR IT LI LU NL SE**

(56) References cited:
**EP-A-0 007 211**
**US-A-3 799 758**
**US-A-3 853 530**
**US-A-3 988 142**

**The file contains technical information submitted after the application was filed and not included in this specification**

(73) Proprietor: **MONSANTO COMPANY**
**Patent Department 800 North Lindbergh Boulevard**
**St. Louis, Missouri 63166 (US)**

(72) Inventor: **Franz, John Edward**
**9831 Meadowfern Drive**
**Crestwood Missouri 63126 (US)**
Inventor: **Kaufman, Robert John**
**7275 Stanford Avenue**
**University City Missouri 63130 (US)**

(74) Representative: **Lunt, John Cooper et al**
**Monsanto Europe S.A. Patent Department**
**Avenue de Tervuren 270-272 Letter Box No 1**
**B-1150 Brussels (BE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

**Description**

The invention relates to N-formyl-N-phosphonomethylglycine and esters and their use as herbicides, especially post-emergent herbicides. The N-formyl-N-phosphonomethylglycine and esters of the invention have the formula

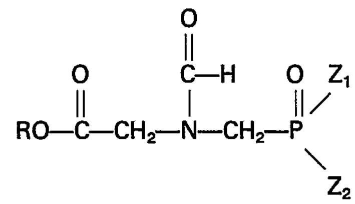

wherein R is hydrogen or $C_{1-5}$ alkyl; $Z_1$ is $XR_1$ or $NR_3R_4$; $Z_2$ is $YR_2$ or $NR_3R_4$; X and Y are independently oxygen or sulfur; $R_1$ is hydrogen $C_{1-5}$ alkyl or phenyl; $R_2$ is hydrogen, $C_{1-5}$ alkyl or phenyl; and $R_3$ and $R_4$ are independently hydrogen or $C_{1-5}$ alkyl; provided that $R_1$ may not be phenyl when $R_2$ is methyl and X and Y are oxygen, provided that $R_1$ may not be methyl when $Z_2$ is $N—(C_2H_5)_2$, and provided that when X and Y are oxygen R, $R_1$ and $R_2$ cannot each be $C_{1-5}$ alkyl.

US—A—3,853,530 discloses compounds similar to those of the above formula. Some of these compounds are known to have herbicidal activity. None of the N-formyl compounds disclosed therein, however, are known to have herbicidal activity. Certain N-phosphonomethylglycines related to the compounds of the present invention but without the N-formyl group of the latter, are disclosed in US—A—3,799,758 as herbicides. According to EP—A—7211, herbicidal activity is also shown by certain N-trifluoroacetyl-N-phosphonomethylglycinates.

The esters of the present invention may be prepared by reacting an ester of N-phosphonomethylglycine with formic acid and acetic anhydride, thereby preparing N-formyl-N-phosphonomethylglycinate in accordance with reaction I below:

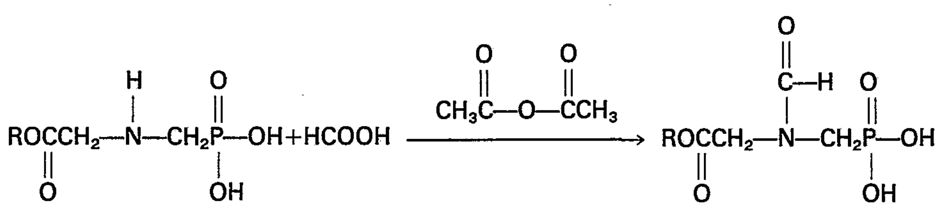
(I)

N-formyl-N-phosphonomethylglycinate may be further esterified by chlorination followed by reaction with an appropriate alcohol or thiol in accordance with reactions II and III below:

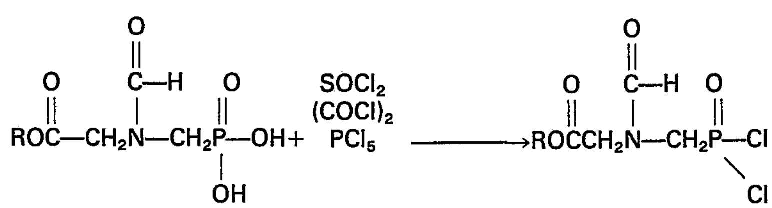

(II)

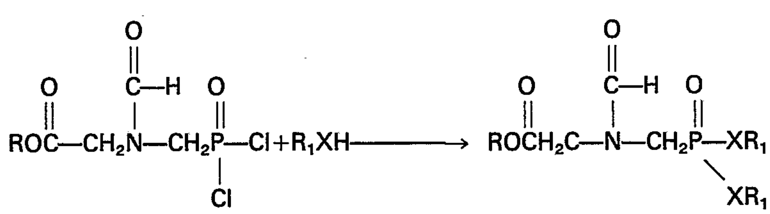
(III)

Chlorinating agents useful in this reaction are oxalyl chloride, thionyl chloride, phosphorous pentachloride and the like.

The above reaction may be used to prepare diesters of N-formyl-N-phosphonomethylglycinate wherein the ester radicals of the phosphonate moiety are the same, i.e. $XR_1$ and $YR_2$ are the same.

Esters wherein $R_1$ and $R_2$ are different may be prepared from the diesters by cleavage of the diester with $PCl_5$ followed by reaction with the appropriate alcohol or thiol in accordance with reactions IV and V below:

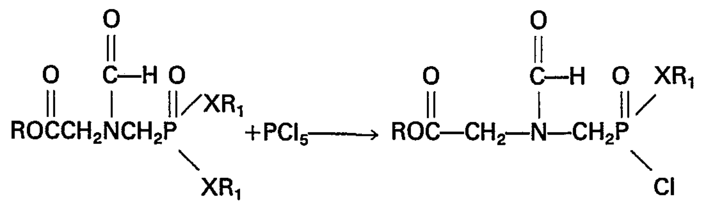
(IV)

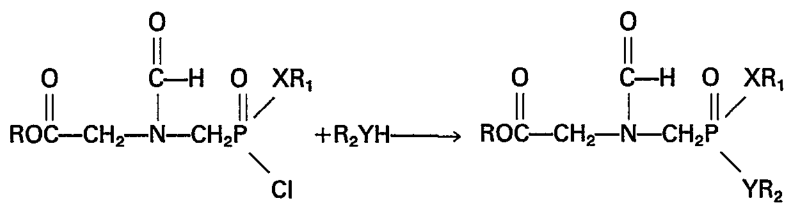
(V)

Amides are prepared by reaction of an amine with the ester acid chloride as follows:

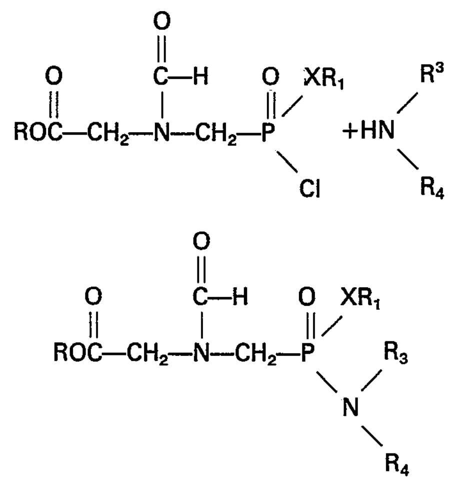
(VI)

The following examples are presented as a means of illustration only, and are not intended as a limitation as to the scope of the invention.

Example I

Preparation of ethyl N-formyl-N-phosphonomethylglycinate

Ethyl-N-phosphonomethylglycine (197 g, 1 mol) is dissolved in 1.5 liters of 97% formic acid. Acetic anhydride (236 ml, 2.5 mol) is added dropwise. The reaction mixture is stirred for two hours and then the excess formic acid and acetic anhydride are stripped off. The residue, a viscous opaque oil, is placed in a dessicator at high vacuum. Analysis by NMR shows unreacted ethyl N-phosphonomethylglycinate. The crude product is dissolved in one liter of 97% formic acid, acetic anhydride (330 ml, 3.5 mol) added and the mixture stirred until the reaction is complete. Excess formic acid and acetic anhydride are removed azeotropically with toluene and ether.

m.p. 127—130°C

Anal. Calc'd.C, 32.01; H, 5.37; P, 13.76
Found C, 31.78; H, 5.22; P, 13.82

Example 2

Preparation of ethyl N-formyl-N-bis(phenoxy)-phosphinylmethylglycinate

Ethyl N-formyl-N-phosphonomethylglycinate (11.2 g., 0.05 mol) and $PCl_5$ (20.8 g, 0.1 mol) are mixed at 0°C, and stirred for one hour resulting in an oil which is concentrated at high vacuum for three hours and then taken up in 100 ml of dry tetrahydrofuran and cooled at 0°C. To the dichloride prepared in accordance with reaction II, a solution of phenol (9.4 g, 0.1 mol) and triethylamine (13.95 ml, 0.1 mol) in 75 ml of tetrahydrofuran is added dropwise. After stirring and stripping excess triethylamine hydrochloride and phenol are taken up in $CH_2Cl_2$. The product is washed with a 10% sodium hydroxide solution and with water. After concentrating at high vacuum, a brown solid is left.

m.p. 64—66°C.

Anal Calc'd:C, 57.30; H, 5.34; P, 8.21
Found: C, 57.43; H, 5.49; P, 9.04

Example 3

Preparation of ethyl N-formyl-N-dimethylthiophosphinylmethylglycinate

Ethyl N-formyl-N-phosphonomethylglycinate (11.2 g, 0.05 mol) is stirred with $(COCl)_2$ (50 ml) for three hours. Concentration at high vacuum results in an oily residue which is taken up in 100 ml tetrahydrofuran and cooled at 0°C. A solution of methanethiol (4.86 g, 0.1 mol) and triethylamine (10.1 g, 0.1 mol) in 100 ml tetrahydrofuran cooled at 0° is added dropwise. After stirring, filtering and concentrating at 0.05 mm, 13 g of crude product is obtained. Chromatographic separation on silica gel results in the recovery of 3 grams of product which is distilled azeotropically with $CH_2Cl_2$ resulting in an oil, $n_D^{22}$ 1.5340.

Anal. Calc'd: C, 33.68; H, 5.65; P, 10.86
Found: C, 33.67; H, 5.57; P, 10.92

Example 4

Preparation of ethyl N-formyl-bis(phenylthio)phosphinylmethylglycinate

The procedure of Example 3 is repeated, using thiophenol in lieu of methanethiol resulting in a yellow solid.

m.p., 45—48°C.

Anal Calc'd: C, 52.80; H, 4.92; P, 7.56
Found: C, 51.70; H, 4.86; P, 7.66

Example 5

Preparation of ethyl N-formyl-N-ethoxy(phenoxy)phosphinylmethylglycinate

Triethyl N-formyl-N-phosphonomethylglycinate (28.13 g., 0.1 mol) and $PCl_5$ (20.8 g, 0.1 mol) are mixed at 0°C. After stirring for one hour and concentrating in vacuum 27.8 g of an orange oil results. The oil (26.8 g) is dissolved in 208 ml of ether to which phenol (9.4 g, 0.1 mol) and triethylamine (10.1 g, 0.1 mol) in 100 ml of petroleum ether are added dropwise. Stirring for two hours, filtering, stripping and concentrating at high vacuum results in 32.2 g of an orange viscous oil. Extraction in 200 ml of ether leaves a colorless oil, $n_D^{22}$ 1.5044.

Anal Calc'd: C, 51.07; H, 6.12; P, 9.41
Found: C, 51.30; H, 6.20; P, 9.52

Example 6

Preparation of methyl N-formyl-N-phenoxy(phenylthio)phosphinylmethylglycinate

The methyl ester of N-formyl-N-methoxy(phenoxy)phosphinylmethylglycine is prepared in a method similar to that of Example 5 using trimethyl N-formyl-N-phosphonomethylglycine in lieu of its triethyl analogue. Said methyl ester (10 g, 0.03 mol) is dissolved in 5 ml benzene, cooled to 0°C and $PCl_5$ (6.2 g) is added. The mixture is stirred at high vacuum and the residue is taken up in 100 ml of tetrahydrofuran and cooled. Benzenethiol (3.09 ml, 0.03 mol) and triethylamine (4.19 ml, 0.03 mol) in 75 ml tetrahydrofuran is added slowly. Filtering, stripping and concentrating at high vacuum results in a yellow oil, $n_D^{22}$ 1.5767.

Anal. Calc'd: C, 53.82; H, 4.78; P, 8.16
Found: C, 54.16; H, 4.97; P, 7.91

Example 7

Preparation of ethyl N-formyl-N-ethoxy(phenylthio)phosphinylmethylglycinate

In accordance with the procedure of Example 6, ethyl N-formyl-N-ethoxy(phenylthio)phosphinylmethylglycinate is prepared as a yellow oil, $n_D^{22}$ 1.5410.

Anal Cal'd: C, 48.69; H, 5.84; P, 8.97
Found: C, 48.65; H, 5.83; P, 8.97

Example 8

Preparation of methyl N-formyl-N-phenoxy(dimethylamino)phosphinylmethylglycinate

Methyl N-formyl-N-phenoxy(methoxy)phosphinylmethylglycinate (6.02 g, 0.02 mol) prepared in accordance with reaction V is dissolved in 5 ml benzene and cooled to 0°C. $PCl_5$ (4.16 g, 0.02 mol) is added and stirred for three hours. After stripping and concentrating in vacuum, the resultant oil is taken up in 100 ml tetrahydrofuran and cooled to 0°C. Dimethylamine (1.8 g, 0.04 mol) is added to the solution and stirred overnight. Purification by filtering, stripping, extraction with petroleum ether and chromatographic separation results in a yellow oil.

Anal Calc'd: C, 49.68; H, 6.09; P, 9.86
Found: C, 49.54; H, 6.15; P, 9.98

Example 9

Preparation of N-formyl-N-phosphonomethylglycine

A mixture of N-phosphonomethylglycine (1.7 g, 0.01 mol) and 25 ml of 97% formic acid is heated and stirred at reflux. An additional 15 ml of formic acid is added and the mixture heated at reflux for a total of 1.5 hours. Formic acid is removed by distillation at reduced pressure. Acetonitrile (25 ml) is added and then water is added dropwise until unreacted N-phosphonomethylglycine precipitates. The precipitate is then

separated from the desired N-formyl-N-phosphonomethylglycine leaving a colorless oil which NMR reveals to be the desired product.

The compounds of the invention have been found to be useful as herbicides, especially as post-emergent herbicides.

The post-emergence herbicidal activity of the various compounds of this invention is demonstrated by greenhouse testing in the following manner. A good grade of top soil is placed in aluminum pans having holes in the bottom and compacted to a depth of 0.95 to 1.27 cm, from the top of the pan. A predetermined number of seeds of each of several dicotyledonous and monocotyledonous annual plant species and/or vegetative propagules for the perennial plant species are placed on the soil and pressed into the soil surface. The seeds and/or vegetative propagules are covered with soil and leveled. The pans are then placed on a sand bench in the greenhouse and watered from below as needed. After the plants reach the desired age (two to three weeks), each pan except for the control pans is removed individually to a spraying chamber and sprayed by means of an atomizer operating at a positive air pressure of approximately 1.46 $kg/cm^2$ absolute. The atomizer contains 6 ml. of a solution or suspension of the chemical and an amount of a cyclohexanone emulsifying agent mixture so that the spray solution or suspension contains about 0.4% by weight of the emulsifier. The spray solution or suspension contains a sufficient amount of the candidate chemical in order to give application rates corresponding to those set forth in the table. The spray solution is prepared by taking an aliquot of a 1.0% by weight stock solution or suspension of the candidate chemical in an organic solvent such as acetone or tetrahydrofuran or in water. The emulsifying agent employed is a mixture comprising 35 weight percent butylamine dodecylbenzene sulfonate and 65 weight percent of a tall oil ethylene oxide condensate having about 11 moles of ethylene oxide per mole of tall oil. The pans are returned to the greenhouse and watered as before and the injury to the plants as compared to the control is observed at approximately two and four weeks as indicated in the table under WAT (weeks after treatment) and the results recorded. In some instances, the four-week observations are omitted.

The post-emergence herbicidal activity index used in Tables I and Table II are as follows:

| Plant response | Index |
|---|---|
| 0—24% control | 0 |
| 25—49% control | 1 |
| 50—74% control | 2 |
| 75—99% control | 3 |
| 100% control | 4 |

The plant species utilized in these tests are identified by letter in accordance with the following legend:

| | |
|---|---|
| A-Canada Thistle* | K-Barnyardgrass |
| B-Cocklebur | L-Soybean |
| C-Velvetleaf | M-Sugar Beet |
| D-Morningglory | N-Wheat |
| E-Lambsquarters | O-Rice |
| F-Smartweed | P-Sorghum |
| G-Yellow Nutsedge* | Q-Wild Buckwheat |
| H-Quackgrass* | R-Hemp Sesbania |
| I-Johnsongrass* | S-Panicum Spp |
| J-Downy Brome | T-Crabgrass |

*Established from vegetative propagules.

TABLE I

| Compound of example no. | WAT | kg/h | Plant species A | B | C | D | E | F | G | H | I | J | K |
|---|---|---|---|---|---|---|---|---|---|---|---|---|---|
| 1 | 4 | 11.2 | 2 | 3 | 4 | 3 | 4 | 4 | 3 | 4 | 2 | 3 | 4 |
| 1 | 4 | 5.6 | 1 | 3 | 3 | 2 | 4 | 4 | 2 | 3 | 1 | 3 | 4 |
| 2 | 4 | 11.2 | 1 | 1 | 1 | 1 | 4 | 2 | 1 | 1 | 2 | 1 | 3 |
| 2 | 4 | 5.6 | 0 | 0 | 0 | 1 | 1 | 1 | 0 | 0 | 1 | 0 | 2 |
| 3 | 4 | 11.2 | 0 | 1 | 2 | 2 | 2 | 2 | 1 | 0 | 2 | 2 | 3 |
| 3 | 4 | 5.6 | 0 | 0 | 0 | 0 | 0 | 0 | 0 | 0 | 0 | 0 | 1 |
| 4 | 4 | 11.2 | 1 | 1 | 0 | 2 | 4 | 3 | 2 | 0 | 0 | 0 | 1 |
| 4 | 4 | 5.6 | 0 | 0 | 1 | 1 | 3 | 0 | 1 | 0 | 0 | 0 | 1 |
| 5 | 2 | 11.2 | 0 | 0 | 0 | 0 | 0 | 0 | 0 | 0 | 0 | 0 | 1 |
| 6 | 4 | 11.2 | 0 | 1 | 2 | 2 | 3 | 3 | 0 | 0 | 0 | 0 | 3 |
| 6 | 4 | 5.6 | 0 | 0 | 0 | 1 | 3 | 1 | 0 | 0 | 0 | 0 | 2 |
|  | 4 | 11.2 | 0 | 0 | 0 | 0 | 4 | 0 | 0 | 0 | 0 | 0 | 0 |
|  | 2 | 5.6 | 0 | 0 | 0 | 1 | 0 | 0 | 0 | 0 | 0 | 0 | 0 |
|  | 4 | 11.2 | 0 | 2 | 1 | 2 | 3 | 0 | 0 | 0 | 0 | 0 | 1 |
|  | 4 | 5.6 | 0 | 2 | 1 | 1 | 3 | 0 | 0 | 0 | 0 | 0 | 1 |
|  | 4 | 11.2 | 3 | 3 | 3 | 4 | 4 | 4 | 3 | 3 | 4 | 3 | 4 |
| 9 | 4 | 5.6 | 2 | 2 | 2 | 2 | 1 | 1 | 2 | 1 | 2 | 1 | 2 |

TABLE II

| Compound | WAT | Kg/h | Plant species L | M | N | O | P | B | Q | D | R | E | F | C | J | S | K | T |
|---|---|---|---|---|---|---|---|---|---|---|---|---|---|---|---|---|---|---|
| 1 | 4 | 5.6 | 2 | 4 | 4 | 3 | 4 | 3 | 2 | 2 | 2 | 4 | 3 | — | 3 | 4 | 4 | 4 |
| 1 | 4 | 1.12 | 1 | 2 | 2 | 1 | 1 | 1 | 1 | 1 | 2 | 4 | 4 | — | 1 | 4 | 3 | 3 |
| 1 | 4 | 0.28 | 0 | 1 | 1 | 1 | 1 | 1 | 0 | 1 | 2 | 3 | 2 | — | 0 | 2 | 2 | 3 |
| 2 | 4 | 5.6 | 0 | 2 | 1 | 1 | 3 | 1 | 1 | 2 | 2 | 3 | 2 | 1 | 1 | 4 | 3 | 3 |
| 2 | 4 | 1.12 | 0 | 0 | 0 | 0 | 3 | 0 | 0 | 1 | 1 | 1 | 1 | 0 | 0 | 3 | 2 | 1 |
| 2 | 4 | 0.28 | 0 | 0 | 0 | 0 | 0 | 0 | 0 | 0 | 1 | 0 | 0 | 0 | 0 | 0 | 0 | 0 |
| 3 | 4 | 5.6 | 1 | 0 | 1 | 1 | 4 | 2 | 0 | 2 | 1 | 2 | 3 | 1 | 1 | 3 | 3 | 3 |
| 3 | 4 | 1.12 | 0 | 0 | 0 | 0 | 3 | 0 | 0 | 1 | 1 | 0 | 2 | 1 | 0 | 2 | 2 | 3 |
| 3 | 2 | 0.28 | 0 | 0 | 0 | 0 | 0 | 0 | 0 | 0 | 0 | 0 | 0 | 1 | 0 | 0 | 1 | 2 |
| 4 | 4 | 5.6 | 1 | 2 | 2 | 2 | 3 | 2 | 1 | 3 | 3 | 4 | 3 | 3 | 2 | 4 | 3 | 4 |
| 4 | 4 | 1.12 | 0 | 1 | 1 | 0 | 1 | 0 | 0 | 2 | 1 | 1 | 1 | 0 | 0 | 3 | 0 | 3 |
| 6 | 4 | 5.6 | 1 | 2 | 0 | 0 | 3 | 0 | 1 | 2 | 0 | 4 | 2 | 1 | 0 | 3 | 3 | 3 |
| 6 | 4 | 1.12 | 0 | 0 | 0 | 0 | 0 | 0 | 0 | 1 | 0 | 2 | 1 | 0 | 0 | 1 | 0 | 2 |
| 9 | 4 | 5.6 | 2 | 4 | 3 | 3 | 4 | 3 | 4 | 3 | 2 | 3 | 4 | 2 | 3 | 4 | 4 | 4 |
| 9 | 4 | 1.12 | 0 | 1 | 2 | 1 | 2 | 2 | 2 | 2 | 1 | 3 | 3 | 2 | 2 | 3 | 2 | 3 |
| 9 | 4 | 0.28 | 0 | 1 | 1 | 0 | 2 | 2 | 1 | 2 | 0 | 1 | 3 | 1 | 1 | 2 | 2 | 3 |

The herbicidal compositions, including cencentrates which require dilution prior to application to the plants, of this invention contain from about 5 to 95 parts by weight of at least one compound of this invention and from 5 to 95 parts by weight of an adjuvant in liquid or solid form, for example, from about 0.25 to 25 parts by weight of wetting agent, from about 0.25 to 25 parts by weight of a dispersant and from 4.5 to about 94.5 parts by weight of inert liquid extender, e.g., water, acetone, tetrahydrofuran, all parts being by weight of the total composition. Preferably, the compositions of this invention contain from 5 to 75 parts by weight of at least one compound of this invention, together with the adjuvants. Where required, from about 0.1 to 2.0 parts by weight of the inert liquid extender can be replaced by a corrosion inhibitor or anti-foaming agent, or both. The compositions are prepared by admixing the active ingredient with an adjuvant including diluents, extenders, carriers and conditioning agents to provide compositions in the form of finely-divided particulate solids, pellets, solutions, dispersions or emulsions. Thus, the active ingredient can be used with an adjuvant such as a finely-divided solid, a liquid of organic origin, water, a wetting agent, a dispersing agent, an emulsifying agent or any suitable combination of these.

The herbicidal compositions of this invention particularly liquids and soluble powders, preferably contain as a conditioning agent one or more surface-active agents in amounts sufficient to render a given composition readily dispersible in water or in oil. The incorporation of a surface-active agent into the compositions greatly enhances their efficacy. By the term "surface-active agent", it is understood that wetting agents, dispersing agents, suspending agents and emulsifying agents are included therein. Anionic, cationic and non-ionic agents can be used with equal facility.

Preferred wetting agents are alkyl benzene and alkyl naphthalene sulfonates, sulfated fatty alcohols, amines or acid amides, long chain acid esters of sodium isothionate, esters of sodium sulfosuccinate, sulfated or sulfonated fatty acid esters petroleum sulfonates, sulfonated vegetable oils, polyoxyethylene derivatives of phenols and alkylphenols (particularly isoocytylphenol and nonylphenol) and polyoxyethylene derivatives of the mono-higher fatty acid esters of hexitol anhydrides (e.g., sorbitan). Preferred dispersants are methyl cellulose, polyvinyl alcohol, sodium lignin, sulfonates, polymeric alkyl naphthalene sulfonates, sodium naphthalene sulfonate, polymethylene bisnaphthalenesulfonate and sodium N-methyl-N-(long chain acid) taurates.

In accordance with the above, the compounds of the invention may be formulated as illustrated by the following examples:

Example 10

| | % by weight |
|---|---|
| Compound 1 | 50 |
| Sodium lignosfulonate | 3 |
| Sodium N-methyl-N-oleyltaurate (67%) | 1 |
| Kaolin clay | 46 |

Example 11

| | % by weight |
|---|---|
| Compound 1 | 5 |
| Sodium lignosulfonate | 3 |
| Sodium N-methyl-N-oleyltaurate | 1 |
| Attapulgite clay | 91 |

Example 12

| | % by weight |
|---|---|
| Compound 2 | 15 |
| Ethylene glycol | 3 |
| Methyl violet | 0.1 |
| Dimethyl formamide | 15 |
| Bentonite (20—40 mesh) | 66.9 |

Example 13

| | % by weight |
|---|---|
| Compound 3 | 50 |
| Calcium dodecyl benzene sulfonate/alkylaryl polyethylene blend | 5 |
| Xylene | 45 |

Example 14

| | % by weight |
|---|---|
| Compound 4 | 50 |
| Calcium dodecyl benzene sulfonate/alkylaryl polyethylene blend | 5 |
| Heavy aromatic naptha | 45 |

Example 15

| | % by weight |
|---|---|
| Compound 4 | 5 |
| Tall oil | 2 |
| Isophorone | 15 |
| Diatomaceous earth | 78 |

Example 16

| | % by weight |
|---|---|
| Compound 5 | 95 |
| Calcium dodecyl benzene sulfonate/alkyl-aryl polyethylene blend | 2 |
| Monochlorobenzene | 3 |

Example 17

| | % by weight |
|---|---|
| Compound 6 | 92 |
| Calcium dodecyl benzene sulfonate/alkylaryl polyethylene blend | 4 |
| Xylene | 3.08 |
| Silicone defoamer | 0.02 |

Example 18

| | % by weight |
|---|---|
| Compound 7 | 95 |
| Calcium dodecyl benzene sulfonate/alkylaryl polyethylene blend | 4 |
| $C_9$ aromatics | 1 |

Example 19

| | % by weight |
|---|---|
| Compound 8 | 80 |
| Calcium dodecyl benzene sulfonate/alkylaryl polyethylene blend | 5 |
| Xylene | 15 |

Example 20

| | % by weight |
|---|---|
| Compound 9 | 30 |
| Isopropyl amine | 9.45 |
| Ethoxylated tallow amine (0.5 moles ethylene oxide) | 15.00 |
| Water | 45.55 |

Example 21

| | % by weight |
|---|---|
| Compound 9 | 60 |
| Sodium butyl napthalene sulfonate | 2 |
| Kaolinite | 32.99 |
| Silica aerogel | 5 |
| Methyl violet | 0.01 |

When operating in accordance with the present invention, effective amounts of the compounds or compositions of this invention are applied to the plants, in any convenient fashion. The application of liquid and particulate solid compositions to plants or soil can be carried out by conventional methods, e.g., power dusters, boom and hand sprayers and spray dusters. The compositions can also be applied from airplanes as a dust or a spray because of their effectiveness at low dosages.

There are several methods for applying liquid compositions of this invention to emerged plants. Such methods include the use of wiper systems whereby the plant to be treated is contacted with an absorbent material containing the particular liquid composition, a portion of which is thereby released onto the plant upon contact therewith. Such wiper systems typically comprise a reservoir of the liquid composition into which a portion of the absorbent material is placed and is fed therethrough. Generally, substances employable as absorbent material include substances of any shape or form capable of absorbing the liquid composition and releasing a portion of the same upon contact with the plant. Typical absorbent materials include felt, foam rubber, cellulose, nylon, sponges, hemp, cotton, burlap, polyester over acrylic, combinations thereof and the like. Forms of absorbent material include rope, twine, string, cloths, carpets, combinations thereof and the like. These forms may be assembled in any manner desired including a pipe rope wick, a wedge rope wick, a multi-rope wick and the like.

In another application method, liquid compositions may be selectively applied to weeds by the use of recirculating sprayer systems wherein the recirculating spray unit is mounted on a tractor or high clearance mobile equipment and the spray is directed horizontally onto the weeds growing over a crop. Spray not intercepted by the weeds is collected in a recovery chamber before contacting the crop and is reused. Roller applications may also be employed to apply liquid compositions to weeds growing over a crop.

In yet another application method, shielded applicators may be employed to direct the liquid composition in the form of a spray onto the weeds while effectively shielding the crops from the spray.

These and other application methods for selectively applying liquid compositions to weeds are discussed in detail in *Innovative Methods of Post-Emergence Weed Control*, McWhorter C. G., Southern Weed Science Society, 33rd Annual Meeting Proceedings, Jan. 15—17, 1980; Auburn University Printing Service, Auburn, Alabama U.S.A.

Another method of applying liquid compositions of this invention to plants includes controlled droplet application which is also known as the ultra low-volume chemical application. Controlled droplet application involves the production of uniform or nearly uniform spray drops of a predetermined size and the conveyance of these drops with negligible evaporation to a spray target. In particular, this method comprises feeding spray solutions to a rotary atomizer comprising a small disk with serrated edges that disperses liquid into droplets as the disk spins. Different droplet sizes are produced by changing solution flow rates to the spinning disk or changing the speed of rotation of the disk.

The aforementioned and other methods for applying liquid compositions to plants are discussed in detail in "Rope Wick Applicator—Tool with a Future", Dale, James E., pp. 3—4, "The Recirculating Sprayer and Roundup® Herbicide", Derting, Claude W., pp. 5—7, and "C.D.A. Herbicide Application", McGarvey, Frank X., *Weeds Today*, Volume 11, number 2, pp. 8—9, Late Spring, 1980, 309 W. Clark St., Champaign, Illinois.

The application of an effective amount of the compounds or compositions of this invention to the plant is essential and critical for the practice of the present invention. The exact amount of active ingredient to be

employed is dependent upon the response desired in the plant as well as such other factors as the plant species and stage of development thereof, and the amount of rainfall as well as the specific glycine employed. In foliar treatment for the control of vegetative growth, the active ingredients are applied in amounts from about 0.112 to about 22.4 or more kilograms per hectare. An effective amount for phytotoxic or herbicidal control is that amount necessary for overall or selective control, i.e., a phytotoxic or herbicidal amount. It is believed that one skilled in the art can readily determine from the teachings of this specification, including examples, the approximate application rate.

## Claims

1. A compound having the formula

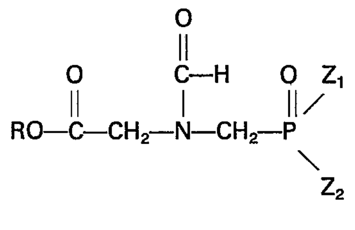

wherein R is hydrogen or $C_{1-5}$ alkyl; $Z_1$ is $XR_1$ or $NR_3R_4$; $Z_2$ is $YR_2$ or $NR_3R_4$; X and Y are independently oxygen or sulfur; $R_1$ is hydrogen, $C_{1-5}$ alkyl or phenyl; $R_2$ is hydrogen, $C_{1-5}$ alkyl or phenyl; $R_3$ and $R_4$ are independently hydrogen or $C_{1-5}$ alkyl; provided that $R_1$ may not be phenyl when $R_2$ is methyl and X and Y are oxygen, provided that $R_1$ may not be methyl when $Z_2$ is $N$—$(C_2H_5)_2$, and provided that when X and Y are oxygen R, $R_1$ and $R_2$ cannot each be $C_{1-5}$ alkyl.

2. A compound according to Claim 1 wherein Y is sulfur.

3. A compound according to Claim 2 wherein X is oxygen.

4. A compound according to Claim 2 wherein X is sulfur.

5. A compound according to Claim 1 wherein $R_1$ is phenyl.

6. A method for controlling the growth of undesired plants which comprises applying the plant locus a herbicidally effective amount of a compound having the formula

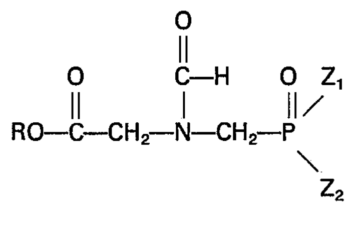

wherein R is hydrogen or $C_{1-5}$ alkyl; $Z_1$ is $XR_1$ or $NR_3R_4$; $Z_2$ is $YR_2$ or $NR_3R_4$; X and Y are independently oxygen or sulfur; $R_1$ is hydrogen, $C_{1-5}$ alkyl or phenyl; $R_2$ is hydrogen, $C_{1-5}$ alkyl or phenyl; $R_3$ and $R_4$ are independently hydrogen or $C_{1-5}$ alkyl; provided that $R_1$ may not be phenyl when $R_2$ is methyl and X and Y are oxygen, and provided that $R_1$ may not be methyl when $Z_2$ is $N$—$(C_2H_5)_2$, and provided further than when X and Y are oxygen, R, $R_1$ and $R_2$ may not be $C_{1-5}$ alkyl.

7. A method according to Claim 6 wherein Y is sulfur.

8. A method according to Claim 7 wherein X is oxygen.

9. A method according to Claim 7 wherein X is sulfur.

10. A method according to Claim 6 wherein $R_1$ is phenyl.

11. A herbicidal composition which comprises from about 5 to about 95 parts by weight of a compound having the formula

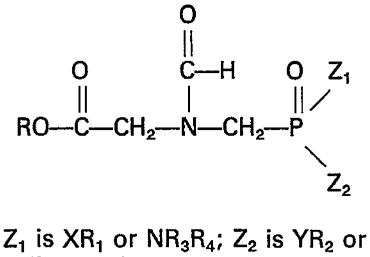

wherein R is hydrogen or $C_{1-5}$ alkyl; $Z_1$ is $XR_1$ or $NR_3R_4$; $Z_2$ is $YR_2$ or $NR_3R_4$; X and Y are independently oxygen or sulfur; $R_1$ is hydrogen, $C_{1-5}$ alkyl or phenyl; $R_2$ is hydrogen, $C_{1-5}$ alkyl or phenyl; $R_3$ and $R_4$ are independently hydrogen or $C_{1-5}$ alkyl; provided that $R_1$ may not be phenyl when $R_2$ is methyl and X and Y are oxygen, provided that $R_1$ may not be methyl when $Z_2$ is $N$—$(C_2H_5)_2$, and provided that when X and Y are

oxygen R, $R_1$ and $R_2$ cannot each be $C_{1-5}$ alkyl; the remaining parts being comprised of one or more inert carriers, diluents and/or adjuvants.

12. A composition according to Claim 11 wherein Y is sulfur.

13. A composition according to Claim 12 wherein X is oxygen.

14. A composition according to Claim 12 wherein X is sulfur.

15. A composition according to Claim 11 wherein $R_1$ is phenyl.

**Patentansprüche**

1. Verbindung der allgemeinen Formel

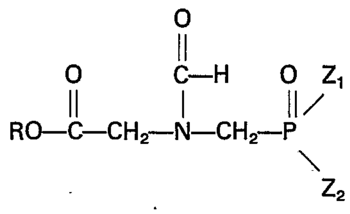

worin R ein Wasserstoffatom oder einen $C_{1-5}$-Alkylrest bedeutet, $Z_1$ für $XR_1$ oder $NR_3R_4$ steht, $Z_2$ gleich $YR_2$ oder $NR_3R_4$ ist, X und Y unabhängig Sauerstoff oder Schwefel darstellen, $R_1$ ein Wasserstoffatom, einen $C_{1-5}$-Alkyl- oder einen Phenylrest bedeutet, $R_2$ ein Wasserstoffatom, einen $C_{1-5}$-Alkyl- oder einen Phenylrest darstellt, $R_3$ und $R_4$ unabhängig für Wasserstoff oder $C_{1-5}$-Alkyl stehen, mit der Maßgabe, daß $R_1$ kein Phenylrest ist, wenn $R_2$ einen Methylrest bedeutet und X und Y Sauerstoffatome sind, mit der Maßgabe, daß $R_1$ kein Methylrest ist, wenn $Z_2$ für $N—(C_2H_5)_2$ steht, und mit der Maßgabe, daß sofern X und Y für Sauerstoff stehen, R, $R_1$ und $R_2$ nicht jeweils gleich $C_{1-5}$-Alkyl sein können.

2. Verbindung nach Anspruch 1, worin Y Schwefel ist.

3. Verbindung nach Anspruch 2, worin X Sauerstoff ist.

4. Verbindung nach Anspruch 2, worin X Schwefel ist.

5. Verbindung nach Anspruch 1, worin $R_1$ ein Phenylrest ist.

6. Verfahren zur Kontrolle des Wachstums von unerwünschten Pflanzen, wobei auf den Pflanzenort eine herbicid-wirksame Menge einer Verbindung der allgemeinen Formel

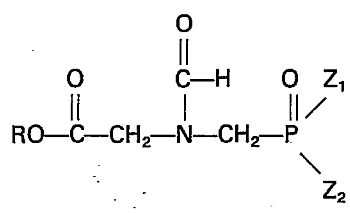

aufgebracht wird, worin R ein Wasserstoffatom oder einen $C_{1-5}$-Alkylrest bedeutet, $Z_1$ für $XR_1$ oder $NR_3R_4$ steht, $Z_2$ gleich $YR_2$ oder $NR_3R_4$ ist, X und Y unabhängig Sauerstoff oder Schwefel darstellen, $R_1$ ein Wasserstoffatom, einen $C_{1-5}$-Alkylrest oder einen Phenylrest bedeutet, $R_2$ ein Wasserstoffatom, einen $C_{1-5}$-Alkyl- oder einen Phenylrest darstellt, $R_3$ und $R_4$ unabhängig für Wasserstoff oder $C_{1-5}$-Alkyl stehen, mit der Maßgabe, daß $R_1$ kein Phenylrest ist, wenn $R_2$ einen Methylrest bedeutet und X und Y Sauerstoffatome sind, und mit der Maßgabe, daß $R_1$ kein Methylrest ist, wenn $Z_2$ für $N—(C_2H_5)_2$ steht, und ferner mit der Maßgabe, daß sofern X und Y für Sauerstoff stehen, R, $R_1$ und $R_2$ nicht jeweils gleich $C_{1-5}$-Alkyl sein können.

7. Verfahren nach Anspruch 6, worin Y Schwefel ist.

8. Verfahren nach Anspruch 7, worin X Sauerstoff ist.

9. Verfahren nach Anspruch 7, worin X Schwefel ist.

10. Verfahren nach Anspruch 6, worin $R_1$ ein Phenylrest ist.

11. Herbicide Zusammensetzung, die von etwa 5 bis etwa 95 Gewichtsteile einer Verbindung der allgemeinen Formel

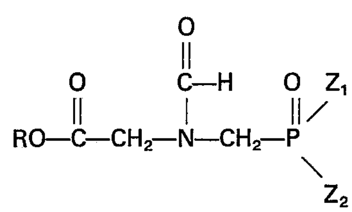

enthält, worin R ein Wasserstoffatom oder einen $C_{1-5}$-Alkylrest bedeutet, $Z_1$ für $XR_1$ oder $NR_3R_4$ steht, $Z_2$

gleich $YR_2$ oder $NR_3R_4$ ist, X und Y unabhängig Sauerstoff oder Schwefel darstellen, $R_1$ ein Wasserstoffatom, einen $C_{1-5}$-Alkyl- oder einen Phenylrest bedeutet, $R_2$ ein Wasserstoffatom, einen $C_{1-5}$-Alkyl- oder einen Phenylrest darstellt, $R_3$ und $R_4$ unabhängig für Wasserstoff oder $C_{1-5}$-Alkyl stehen, mit der Maßgabe, daß $R_1$ kein Phenylrest ist, wenn $R_2$ einen Methylrest bedeutet und X und Y Sauerstoffatome sind, mit der Maßgabe, daß $R_1$ kein Methylrest ist, wenn $Z_2$ für $N-(C_2H_5)_2$ steht, und mit der Maßgabe, daß sofern X und Y für Sauerstoff stehen, R, $R_1$ und $R_2$ nicht jeweils gleich $C_{1-5}$-Alkyl sein können, wobei die verbleibenden Teile von einem oder mehreren inerten Trägern, Verdünnungsmitteln und/oder Zusatzstoffen gebildet werden.

12. Zusammensetzung nach Anspruch 11, worin Y Schwefel ist.
13. Zusammensetzung nach Anspruch 12, worin X Sauerstoff ist.
14. Zusammensetzung nach Anspruch 12, worin X Schwefel ist.
15. Zusammensetzung nach Anspruch 11, worin $R_1$ einen Phenylrest darstellt.

**Revendications**

1. Composé répondant à la formule:

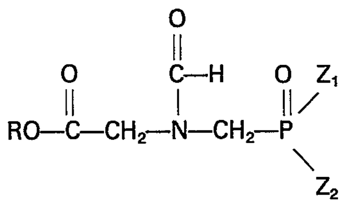

dans laquelle R représente l'hydrogène ou un groupe alkyle en $C_{1-5}$, $Z_1$ représente $XR_1$ ou $NR_3R_4$; $Z_2$ représente $YR_2$ ou $NR_3R_4$; X et Y représentent indépendamment l'oxygène ou le soufre; $R_1$ représente l'hydrogène, un groupe alkyle en $C_{1-5}$ ou le groupe phényle; $R_2$ représente l'hydrogène, un groupe alkyle en $C_{1-5}$ ou le groupe phényle; $R_3$ et $R_4$ représentent indépendamment l'hydrogène ou un groupe alkyle en $C_{1-5}$; à condition que $R_1$ ne puisse pas représenter le groupe phényle lorsque $R_2$ représente le groupe méthyle et que X et Y représentent l'oxygène, à condition que $R_1$ ne puisse pas représenter le groupe méthyle lorsque $Z_2$ représente $N-(C_2H_5)_2$ et à condition que lorsque X et Y représentent l'oxygène, R, $R_1$ et $R_2$ ne puissent pas représenter chacun un groupe alkyle en $C_{1-5}$.

2. Composé selon la revendication 1, caractérisé en ce que Y représente le soufre.
3. Composé selon la revendication 2, caractérisé en ce que X représente l'oxygène.
4. Composé selon la revendication 2, caractérisé en ce que X représente le soufre.
5. Composé selon la revendication 1, caractérisé en ce que $R_1$ représente le groupe phényle.
6. Procédé de lutte contre la croissance de plantes nuisibles, caractérisé en ce qu'il comprend l'application à l'emplacement des plantes d'une quantité herbicide active d'un composé répondant à la formula:

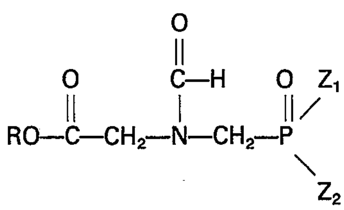

dans laquelle R représente l'hydrogène ou un groupe alkyle en $C_{1-5}$; $Z_1$ représente $XR_1$ ou $NR_3R_4$; $Z_2$ représente $YR_2$ ou $NR_3R_4$; X et Y représentent indépendamment l'oxygène ou le soufre; $R_1$ représente l'hydrogène, un groupe alkyle en $C_{1-5}$ ou le groupe phényle; $R_2$ représente l'hydrogène, un groupe alkyle en $C_{1-5}$ ou le groupe phényle; $R_3$ et $R_4$ représentent indépendamment l'hydrogène ou un groupe alkyle en $C_{1-5}$; à condition que $R_1$ ne puisse pas représenter le groupe phényle lorsque $R_2$ représente le groupe méthyle et que X et Y représentent l'oxygène, et à condition que $R_1$ ne puisse pas représenter le groupe méthyle lorsque $Z_2$ représente $N-(C_2H_5)_2$ et à condition encore que lorsque X et Y représentent l'oxygène, R, $R_1$ et $R_2$ ne puissent pas représenter un groupe alkyle en $C_{1-5}$.

7. Procédé selon la revendication 6, caractérisé en ce que Y représente le soufre.
8. Procédé selon la revendication 7, caractérisé en ce que X représente l'oxygène.
9. Procédé selon la revendication 7, caractérisé en ce que X représente le soufre.
10. Procédé selon la revendication 6, caractérisé en ce que $R_1$ représente le groupe phényle.

11. Composition herbicide, caractérisée en ce qu'elle comprend d'environ 5 à environ 95 parties en poids d'un composé répondant à la formule:

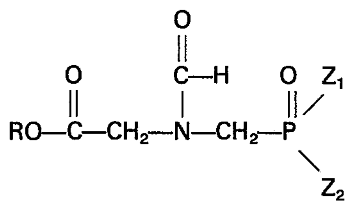

dans laquelle R représente l'hydrogène ou un groupe alkyle en $C_{1-5}$; $Z_1$ représente $XR_1$ ou $NR_3R_4$; $Z_2$ représente $YR_2$ ou $NR_3R_4$; X et Y représentent indépendamment l'oxygène ou le soufre, $R_1$ représente l'hydrogène, un groupe alkyle en $C_{1-5}$ ou le groupe phényle; $R_2$ représente l'hydrogène, un groupe alkyle en $C_{1-5}$ ou un groupe phényle; $R_3$ et $R_4$ représentent indépendamment l'hydrogène ou un groupe alkyle en $C_{1-5}$; à condition que $R_1$ ne puisse pas représenter le groupe phényle lorsque $R_2$ représente un groupe méthyle et que X et Y représentent l'oxygène, à condition que $R_1$ ne puisse pas représenter le groupe méthyle lorsque $Z_2$ représente $N—(C_2H_5)_2$, et à condition que lorsque X et Y représentent l'oxygène, R, $R_1$ et $R_2$ ne puissent pas représenter chacun un groupe alkyle en $C_{1-5}$; le reste étant constitué par un ou plusieurs véhicules inertes, diluants et/ou adjuvants.

12. Composition selon la revendication 11, caractérisée en ce que Y représente le soufre.

13. Composition selon la revendication 12, caractérisée en ce que X représente l'oxygène.

14. Composition selon la revendication 12, caractérisée en ce que X représente le soufre.

15. Composition selon la revendication 11, caractérisée en ce que $R_1$ représente ls groupe phényle.